# EUROPÄISCHE PATENTSCHRIFT

(11) **EP 2 985 178 B1**
(45) Veröffentlichungstag und Bekanntmachung des Hinweises auf die Patenterteilung: **26.10.2016**
(21) Anmeldenummer: 15180746.8
(22) Anmeldetag: 12.08.2015
(51) Int. Cl.: B60N 2/64, B60N 2/68, B60N 2/44

(54) **FAHRZEUGSITZ MIT VERÄNDERBARER RÜCKENLEHNE**
VEHICLE SEAT WITH ADJUSTABLE BACKREST
SIEGE DE VEHICULE DOTE D'UNE FORME DE DOSSIER POUVANT ETRE MODIFIEE

(30) Priorität: 13.08.2014 DE 102014011884
(43) Veröffentlichungstag der Anmeldung: 17.02.2016
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A1- 2 719 575
- FR-A1- 2 972 399
- JP-U- H 033 256

## Beschreibung

Die Erfindung betrifft einen Fahrzeugsitz umfassend ein Sitzteil und eine Rückenlehne, wobei die Rückenlehne mindestens eine sich in Rückenlehnenhöhenrichtung erstreckende linksseitige Rückenlehnenlängsstütze, eine mindestens eine sich in Rückenlehnenhöhenrichtung erstreckende mittlere Rückenlehnenlängsstütze und mindestens eine sich in Rückenlehnenhöhenrichtung erstreckende rechtsseitige Rückenlehnenlängsstütze aufweist, wobei die Rückenlehnenlängsstützen jeweils in einem unteren Endbereich mit dem Sitzteil und/oder einem Sitzteilrahmen befestigt sind und mindestens ein Polsterelement aufweisen.

Es sind aus dem Stand der Technik Fahrzeugsitze mit einem Sitzteil und einer Rückenlehne bekannt, bei denen eine Breite der Rückenlehne entsprechend einem Fahrer bzw. Fahrgast schmal oder breit ausgebildet ist. Diese Fahrzeugsitze weisen jedoch nur eine einzige Breite der Rückenlehne auf, so dass beispielsweise bei einem Wechsel des Fahrers mit unterschiedlicher Größe und Breite der Sitzkomfort abnimmt, da der Fahrer entweder eine zu kleine Breite der Rückenlehne, wodurch der Fahrer keine optimale Abstützung seines Rückens durch die Rückenlehne erfährt, da er nicht in die Rückenlehnenform hineinpasst, oder eine zu große Breite der Rückenlehne, wodurch eine seitliche Abstützung nicht mehr gegeben ist, vorfindet. Auch sind solche Sitze in der Herstellung kostspielig und aufwändig, da eine große Anzahl verschiedener Rückenlehnenbreiten im Sortiment vorhanden sein muss.

Darüber hinaus sind auch Kindersitze aus dem Stand der Technik bekannt, die eine Verbreiterung der Rückenlehne durch ein Auseinanderziehen der selbigen oder durch ein Herausziehen von Polsterelementen, die innerhalb der Rückenlehne angeordnet sind, oder durch Anbringung zusätzlicher Polsterelemente an der Rückenlehne ermöglicht. Hierbei werden beispielsweise sich im Inneren der Rückenlehne befindliche Abstützungen bzw. Polsterelemente über die ganze Höhenausdehnung der Rückenlehne nach außen gezogen, wodurch es möglich ist, den Kindersitz auch bei Heranwachsen des Kindes längere Zeit zu benutzen. Ein solcher Aufbau genügt jedoch nicht den Anforderungen an einen Fahrzeugsitz in puncto Sicherheit, da die herausgezogenen bzw. angebrachten Abstützungen keine sichere Abstützung des Fahrers erlauben. Darüber hinaus wird durch das Herausziehen der Polsterteile entlang der gesamte Höhenrichtung auch im Beckenbereich die Breite der Rückenlehne erhöht, was zu einer mangelhaften Abstützung in diesem Bereich führt.

Ein gattungsgemässer Fahrzeugsitz ist aus der EP2719575A1 bekannt.

Es ist demzufolge Aufgabe der vorliegenden Erfindung, gattungsgemäße Fahrzeugsitze derart weiterzuentwickeln, um durch eine einfache Konstruktion des Fahrzeugsitzes eine schnelle und sichere Verstellung der Rückenlehne in einem oberen Bereich bei gleichzeitiger optimaler Abstützung im Beckenbereich es dem Fahrer bzw. Fahrgast zu ermöglichen, den Sitz gemäß des Komfortverständnisses des Fahrgastes schnell und einfach einzustellen. Gleichzeitig werden auch die Herstellungskosten durch einen solchen Sitz minimiert, da es nun möglich ist mit einem Sitz verschiedene Breiten der Rückenlehne einzustellen.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, dass bei einem Fahrzeugsitz umfassend ein Sitzteil und eine Rückenlehne, wobei die Rückenlehne mindestens eine sich in Rückenlehnenhöhenrichtung erstreckende linksseitige Rückenlehnenlängsstütze, mindestens eine sich in Rückenlehnenhöhenrichtung erstreckende mittlere Rückenlehnenlängsstütze und mindestens eine sich in Rückenlehnenhöhenrichtung erstreckende rechtsseitige Rückenlehnenlängsstütze aufweist, wobei die Rückenlehnenlängsstützen jeweils in einem unteren Endbereich mit dem Sitzteil und/oder einem Sitzteilrahmen verbunden sind und mindestens ein Polsterelement aufweisen. Die Rückenlehnenlängsstützen sind in ihren unteren Endbereichen gelenkig mit dem Sitzteil und/oder dem Sitzteilrahmen verbunden und mittels mindestens einer in einem oberen Bereich der Rückenlehne angeordneten länglichen Rückenlehnenquerstrebe miteinander verbunden, wodurch durch eine Verschiebung der mindestens einen Rückenlehnenquerstrebe entlang der Rückenlehnenhöhenrichtung in dem oberen Bereich der Rückenlehne ein Abstand zwischen mindestens zwei Rückenlehnenlängsstützen veränderbar ist.

Als Rückenlehnenlängsstütze ist hierbei ein Element zu verstehen, das an seinem unteren Endbereich mit dem Sitzteil und/oder dem Sitzteilrahmen verbunden ist und sich in Rückenlehnenhöhenrichtung bis zu einem oberen Endbereich vorzugsweise durchgehend erstreckt.

Ebenso ist die Rückenlehnenquerstrebe ein Element, das sich im Wesentlichen in Sitzbreitenrichtung erstreckt und vorzugsweise mit den Rückenlehnenlängsstützen verbunden ist. Dabei ist es denkbar, dass die Rückenlehnenquerstrebe gerade oder auch gebogen ausgebildet sein kann. Es ist auch denkbar, dass die Rückenlehnenquerstrebe in ihrer Länge veränderbar ist. Weiter ist es auch möglich, dass die Rückenlehne aus einem elastischen und/oder verformbaren Material besteht, wobei auch dehnbare Materialien denkbar sind.

Es kann sich hierbei um eine starre oder eine in Bezug zum Sitzteil um eine Achse verschwenkbare Rückenlehne handeln.

Dabei können die Rückenlehnenlängsstützen jeweils mindestens ein separates Polsterelement aufweisen oder über ein einzelnes oder mehreren Polsterteilen miteinander verbunden sein. So kann die Rückenlehne beispielsweise ein an den Rückenlehnenlängsstützen durchgehendes Polsterteil aufweisen, oder jede Rückenlehnenlängsstütze weist jeweils ein unabhängiges Polsterteil auf.

Durch diese Ausgestaltung ist es möglich, dass eine in einem solchen erfindungsgemäßen Fahrzeugsitz sitzende Person die Breite der Rückenlehne in einem oberen Bereich, also im Bereich der Brust bzw. der Schultern, individuell auf die jeweilige Breite der Brust bzw. der Schultern des Fahrers einstellen kann. Dadurch ist es auch möglich, ohne großen Aufwand bei einem Fahrerwechsel die Breite der Rückenlehne im oberen Bereich die Breite der Rückenlehne und daher den Sitzkomfort optimal an die Bedürfnisse des jeweiligen Fahrers einzustellen.

Es ist ein Anliegen, auch bei einem normalen Fahrbetrieb die Möglichkeit der Veränderung des Abstandes innezuhaben, da beispielsweise eine am Sitz angebrachte Armlehne, auf der ein Joystick oder ähnliches angebracht sein kann, eine Veränderung der Armposition auch gleichzeitig eine Veränderung in der Breite des Körpers, hier insbesondere eine Verbreiterung im Schulterbereich, zur Folge hat. Durch Veränderung der Breite der Rückenlehne in diesem Bereich kann also bei Bedienung des Joysticks oder dergleichen eine komfortable Abstützung durch die Rückenlehne gewährleistet werden.

Auch nachdem eine Einstellung der Rückenlehnenbreite erfolgt ist, bleibt die Breite in einem unteren Bereich der Rückenlehne, beispielsweise im Bereich der Hüfte, unverändert. Dadurch ist weiterhin eine Abstützung, vor allem in seitlicher Richtung der Rückenlehne, gegeben. Eine Veränderung der Breite in dem unteren Bereich ist nicht notwendig, da sich der Körperbau eines Erwachsenen in diesem Bereich im Allgemeinen nicht signifikant unterscheidet, im Gegensatz zu dem oberen Bereich des Rückens eines Fahrers.

Weiterhin ist eine sichere Abstützung des Fahrers in jeder Einstellung der Rückenlehne gewährleistet, da nicht wie im Stand der Technik Polsterteile herausgezogen bzw. angebracht werden, sondern Bauteile der Rückenlehne, auf denen mindestens ein Polsterelement angebracht ist, insbesondere die Rückenlehnenlängsstützen, zur Änderung der Breite in ihrer Form bzw. ihrer Anordnung verändert werden. Dadurch wird der Rücken des Fahrers weiterhin durch die stabilen Bauteile der Rückenlehne abgestützt.

Die mindestens eine Rückenlehnenquerstrebe ist vorzugsweise mit einem ersten Ende an der linken Rückenlehnenlängsstütze und mit einem zweiten Ende an der rechten Rückenlehnenlängsstütze befestigt.

Es ist durch die vorliegende Erfindung ebenso ein besonders einfacher Aufbau der Rückenlehne durch die links- und rechtsseitige Rückenlehnenlängsstützen sowie der mittleren Rückenlehnenlängsstütze und der mindestens einen Rückenlehnenquerstrebe realisiert, wobei die mindestens eine Rückenlehnenquerstrebe mit den Rückenlehnenlängsstützen verbunden ist. Es ist dadurch eine zusätzliche Stabilisierung der Rückenlehne durch eine Verbindung der Rückenlehnenstützen mit der mindestens einen Rückenlehnenquerstrebe möglich.

Durch die mittlere Rückenlehnenlängsstütze ist eine gute Abstützung für den Fahrer im Bereich der Wirbelsäule möglich, insbesondere dann, wenn die mittlere Rückenlehnenlängsstütze mittig des Rückens, also im Bereich der Wirbelsäule, des Fahrers angeordnet ist.

Dadurch, dass die Rückenlehnenlängsstützen jeweils in ihren unteren Bereichen gelenkig mit dem Sitzteil und/oder dem Sitzteilrahmen verbunden sind, ist auch eine Verschwenkung der Rückenlehne gegenüber dem Sitzteil möglich, indem die Rückenlehnenlängsstützen jeweils um eine Schwenkachse geschwenkt werden. Es ist hierbei denkbar, dass diese Schwenkachsen nicht nur parallel ausgebildet sein können, sondern jeweils einen Winkel zueinander bilden und in einer gemeinsamen Ebene liegen oder sogar windschief zueinander sein können. In dem Fall, dass die Schwenkachsen jeweils einen Winkel zueinander bilden und in einer gemeinsamen Ebene liegen, ist die Verschwenkung der Rückenlehne eine helixartige bzw. torsionsmäßige Verschwenkung.

Durch eine solche Verschwenkung der Rückenlehne passt sich die Form der Rückenlehne an die Ergonomie des Menschen an, insbesondere bei einer Drehung des Oberkörpers in eine nach hinten gerichtete Arbeitsstellung.

Erfindungsgemäß wird der Abstand zwischen mindestens zwei Rückenlehnenlängsstützen verändert, indem die mindestens eine Rückenlehnenquerstrebe entlang der Rückenlehnenhöhenrichtung verschoben wird. Genauer betrachtet bleiben beispielsweise die Verbindungen der Rückenlehnenquerstrebe mit der linksseitigen und der rechtsseitigen Rückenlehnenlängsstütze ortsfest, wobei sich die Verbindungen der mittleren Rückenlehnenlängsstütze mit der Rückenlehnenquerstrebe entlang der Rückenlehnenhöhenrichtung bewegen können. Es wird also der Abstand dadurch verändert, dass sich die mindestens eine Rückenlehnenquerstrebe in ihrer Position beziehungsweise ihrer Lage verändert. Durch die obig beschriebene Anordnung der Rückenlehnenquerstrebe bzw. deren Verbindungen zu den Rückenlehnenlängsstützen wird etwa die anfangs in einer horizontalen Lage befindliche Rückenlehnenquerstrebe in eine Lage mit einem Winkel zur horizontalen Lage bewegt, wodurch sich die auf die horizontale Lage projizierte Länge ändert. Dadurch ändert sich ebenso der Abstand bzw. insgesamt die Breite der Rückenlehne insgesamt. Eine solche Veränderung der Lage entspricht einer Verkleinerung des Abstandes. Eine umgekehrte Verschiebung der Rückenlehnenquerstrebe, also aus einer Lage mit einem Winkel zur horizontalen Lage in eine horizontale Lage, entspricht hierbei einer Vergrößerung des Abstandes bzw. der Breite der Rückenlehne.

Anstatt nur eine einzige Rückenlehnenquerstrebe zu verwenden, ist es eine bevorzugte Ausführungsform, zwei verschiedene Rückenlehnenquerstreben zu verwenden. Diese Ausführungsform sieht dabei eine zwischen der linken und der mittleren Rückenlehnenlehnenlängsstütze angeordnete erste Rückenlehnenquerstrebe und eine zwischen der rechten und der mittleren Rückenlehnenlängsstütze angeordnete zweite Rückenlehnenquerstrebe vor, wobei die erste und/oder die zweite Rückenlehnenquerstrebe entlang der Rückenlehnenhöhenrichtung verschiebbar sind.

Vorzugsweise ist dabei die erste Rückenlehnenquerstrebe mit einem ersten Ende an der linken Rückenlehnenlängsstütze und mit einem zweiten Ende an der mittleren Rückenlehnenlängsstütze befestigt und die zweite Rückenlehnenquerstrebe mit einem ersten Ende an der rechten Rückenlehnenlängsstütze und mit einem zweiten Ende an der mittleren Rückenlehnenlängsstütze befestigt.

Durch Verwendung einer ersten und einer zweiten Rückenlehnenquerstrebe ist es insbesondere möglich, die erste und zweite Rückenlehnenquerstrebe unabhängig voneinander entlang der Rückenlehnenhöhenrichtung zu verschieben. Eine Verschiebung der Rückenlehnenquerstreben kann auf direktem oder indirektem Weg geschehen. Dadurch kann ein Fahrer den Abstand bzw. die Breite der Rückenlehne entsprechend individuell linksseitig und rechtsseitig anpassen, entsprechend den Bedürfnissen des Fahrers, etwa aufgrund einer Wirbelsäulenverkrümmung oder aufgrund von speziellen Arbeitspositionen, die beispielsweise nach hinten gerichtet sind.

Insbesondere ist die Verwendung zweier Rückenlehnenquerstreben auch für eine mögliche Verschwenkung der Rückenlehne vorteilhaft, da die oberen Bereich der jeweiligen Rückenlehnenlängsstützen dadurch besser der helixförmigen Verschwenkung der Rückenlehne folgen können.

Es ist hierbei auch besonders vorteilhaft, wenn die mindestens eine Rückenlehnenquerstrebe gelenkig mit den Rückenlehnenlängsstützen verbunden ist, wodurch der oben beschriebenen helixförmigen Verschwenkung besonders gut gefolgt werden kann. Darüber hinaus kann die mindestens eine Rückenlehnenquerstrebe durch eine solche gelenkige Verbindung entsprechend leicht in ihrer Lage verändert werden, was dementsprechend eine leicht durchführbare Abstandsänderung bedeutet.

Anstelle der oder zusätzlich zur gelenkigen Verbindung kann auch eine Befestigung derart angedacht sein, dass die mindestens eine Rückenlehnenquerstrebe verschiebbar an den Rückenlehnenlängsstützen befestigt ist. Eine Verschiebung ist hierbei sowohl in Rückenlehnenhöhenrichtung als auch in Rückenlehnenbreitenrichtung denkbar.

Es ist insbesondere vorteilhaft, wenn die zweiten Enden der ersten und der zweiten Rückenlehnenquerstrebe verschiebbar, vorzugsweise an der mittleren Rückenlehnenlängsstütze, befestigt sind. Die ersten Enden, die an der linksseitigen bzw. an der rechtsseitigen Rückenlehnenlängsstütze befestigt sind, sind dabei bevorzugt fest oder gelenkig angebracht. Das bedeutet also, dass die ersten Enden ortsfest sind und die zweiten Enden sich entlang der Rückenlehnenhöhenrichtung bewegen können. Durch diese Anordnung wird auch hier die projizierte Länge verringert, was insgesamt zu einer Änderung des Abstandes führt.

Eine besonders bevorzugte Ausführungsform sieht vor, dass die Verschiebung der mindestens einen Rückenlehnenquerstrebe mittels mindestens einer Verschiebeeinrichtung vorgenommen wird. Es ist vorteilhaft, wenn dabei eine erste und eine zweite Rückenlehnenquerstrebe vorgesehen sind und diese mit der mindestens einen Verschiebeeinrichtung verbunden sind. Bevorzugt ist die mindestens eine Verschiebeeinrichtung an der mittleren Rückenlehnenlängsstütze angebracht, so dass die erste und die zweite Rückenlehnenquerstrebe jeweils mit ihren zweiten Enden an der Verschiebeeinrichtung befestigt sind. Es ist aber auch eine beliebige Anordnung bzw. Verteilung der mindestens einen Verschiebeeinrichtung an den Rückenlehnenlängsstützen möglich und denkbar.

Die Verschiebeeinrichtung kann entweder bereits in der Rückenlehnenlängsstütze integriert sein oder nachträglich, also nachrüstbar, an die Rückenlehnenlängsstützen angebracht werden. Eine nachträgliche Anbringung kann auf verschiedene Arten erfolgen, wie beispielsweise ein Anschweißen an die Rückenlehnenlängsstützen, eine Verschraubung oder ein Vernieten mit den Rückenlehnenlängsstützen. Die Verschiebeeinrichtung ist so ausgestaltet, dass eine Bewegung in Rückenlehnenhöhenrichtung gestattet ist.

Die mindestens eine Verschiebeeinrichtung umfasst mindestens eines der folgenden: mindestens einen entlang der Rückenlehnenhöhenrichtung fahrbaren Motor, mindestens eine Drehspindel, mindestens einen pneumatisch betriebenen Hubzylinder, mindestens ein Federelement, mindestens eine Rastvorrichtung.

Bei dem Motor handelt es sich vorzugsweise um einen Elektromotor. Es ist denkbar, dass daher die Verschiebeeinrichtung elektrisch und/oder handbetrieben erfolgen kann. Beispielsweise ist es denkbar, dass die Drehspindel durch einen Motor angetrieben wird, wobei der Motor auch von der Drehspindel abkoppelbar ist und die Drehspindel von Hand bewegt werden kann.

Vorzugsweise umfasst die Verschiebeeinrichtung ein bewegtes Element, an dem die Rückenlehnenquerstreben, beispielsweise mit ihren zweiten Enden, wie oben beschrieben, befestigt sind, das durch den Motor und dergleichen in Rückenlehnenhöhenrichtung bewegt werden kann.

Bevorzugt wird dieses bewegte Element durch eine Führungsschiene geführt. Dadurch wird eine sichere Führung des bewegten Elements gewährleistet. Die Führungsschiene kann dabei ein integriertes Teil der Verschiebeeinrichtung oder auch ein separates Teil sein, dass an der Verschiebeeinrichtung und/oder der Rückenlehnenlängsstütze angeordnet ist.

Bevorzugt ist die Führungsschiene ein separates Teil, um eine Austauschbarkeit zu gewährleisten. Es ist auch eine bevorzugte Ausgestaltung, wenn die Rückenlehnenquerstrebe lösbar mit den Rückenlehnenlängsstützen verbunden ist. Ebenso ist es vorteilhaft, wenn auch die Rückenlehnenlängsstützen lösbar mit dem Sitzteil und/oder dem Sitzteilrahmen verbunden sind. Hierdurch ist es also insgesamt möglich, einzelne Komponenten der Rückenlehne auszutauschen und auch gegebenenfalls eine Verschiebeeinrichtung, wie oben beschrieben, nachzurüsten.

Es ist aber auch denkbar, dass die jeweiligen Bauteile, insbesondere die mindestens eine-Rückenlehnenquerstrebe mit den Rückenlehnenlängsstützen, dauerhaft miteinander verbunden sind.

Die Materialauswahl der oben beschriebenen Bauteile, insbesondere der Rückenlehnenlängsstützen und der mindestens einen Rückenlehnenquerstrebe, kann durchaus vielfältig sein. In der Regel werden diese jedoch entweder aus einem Metall und/oder einem elastischen Material, vorzugsweise Kunststoff, bestehen.

Gemäß einer Ausführungsform ist die mindestens eine Rückenlehnenquerstrebe im oberen Drittel, bevorzugter im oberen Viertel, der Rückenlehne bezüglich der Rückenlehnenhöhenrichtung angeordnet. Dabei kann die mindestens eine Rückenlehnenquerstrebe sowohl seitlich, an oberen Enden der Rückenlehnenlängsstützen, hinten bezüglicher einer Sitzlängsrichtung und/oder im Inneren der Rückenlehnenlängsstütze angeordnet sein. Mit oberen Enden kann hier ein oberer Endbereich oder das tatsächliche obere Ende der Rückenlehnenlängsstütze angedacht sein. Es ist zwar auch eine vorderseitige Anordnung denkbar, diese kann jedoch zu einem Drücken gegen den Rücken des Fahrers und daher zu einer weniger komfortablen Sitzposition führen. Ist das Polster jedoch hinreichend dick und/oder sind die Rückenlehnenquerstreben aus einem elastischen Material, kann das Drücken der Rückenlehnenquerstrebe gegen den Rücken vermieden werden.

Eine Anordnung der mindestens einen Rückenlehnenquerstrebe im oberen Drittel bzw. oberen Viertel oder in einem noch weiter oben liegenden Bereich ist vorteilhaft für die Stabilität der Rückenlehne. Hierdurch kann, insbesondere wenn die Rückenlehnenlängsstützen aus einem elastischen Material bestehen, ein Umknicken der Rückenlehnenlängsstützen, beispielsweise nach hinten bezüglich der Sitzlängsrichtung, aufgrund einer Krafteinwirkung auf den Körper des Fahrers vermieden werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1: schematisch eine Vorderansicht eines erfindungsgemäßen Fahrzeugsitzes in einer ersten Position mit einem Sitzteil und einer Rückenlehne, welche eine links- und eine rechtsseitige Rückenlehnenlängsstütze sowie eine mittlere Rückenlehnenlängsstütze und eine Rückenlehnenquerstrebe aufweist;
- Fig. 2: schematisch eine Ansicht des Fahrzeugsitzes gemäß Figur 1 in einer zweiten Position;
- Fig. 3: schematisch eine Rückansicht der Rückenlehne in einer ersten Position;
- Fig. 4: schematisch eine Rückansicht der Rückenlehne in einer zweiten Position;
- Fig. 5: schematisch eine Vorderansicht des Fahrzeugsitzes, wobei nur eine Rückenlehnenquerstrebe in ihrer Lage verändert ist;
- Fig. 6: Verschiebeeinrichtung mit einem Federelement;
- Fig. 7: Verschiebeeinrichtung mit einer Drehspindel;
- Fig. 8: Verschiebeeinrichtung mit einer Rastvorrichtung;
- Fig. 9: Verschiebeeinrichtung mit einem pneumatischen Hubzylinder;
- Fig. 10A-10E: verschiedene Ausgestaltungen der Führungsschiene und des bewegten Elements.
- Fig. 11-12: zeigen eine schematische Draufsicht des Fahrzeugsitzes.

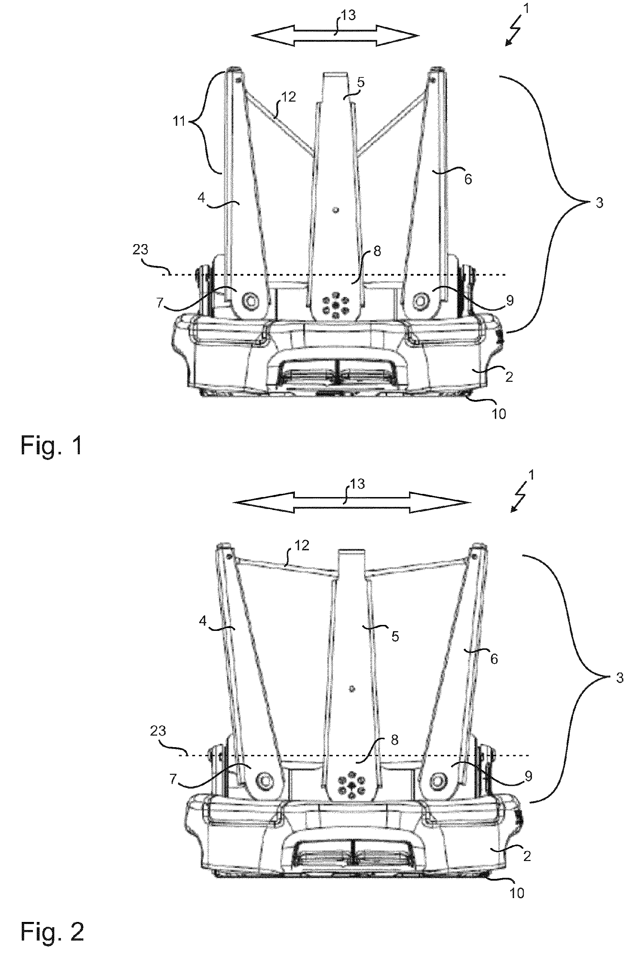

Der in der Figur 1 schematisch in einer Vorderansicht gezeigte Fahrzeugsitz 1 umfasst ein Sitzteil 2 und eine Rückenlehne 3. Die Rückenlehne 3 umfasst dabei eine linksseitige 4, eine mittlere 5 und eine rechtsseitige Rückenlehnenlängsstütze 6 sowie mindestens eine Querstrebe 12, die in einem oberen Bereich 11 angeordnet ist. Die Rückenlehnenlängsstützen sind dabei jeweils in einem unteren Endbereich 7, 8, 9 mit dem Sitzteil 2 bzw. dem Sitzteilrahmen 10 verbunden. Die Rückenlehne 3 ist dabei um eine Schwenkachse 23, die im Wesentlichen in Sitzbreitenrichtung verläuft, schwenkbar. Exemplarisch ist in der Figur 1 ein Abstand 13 durch die linksseitige 4 und die rechtsseitige Rückenlehnenlängsstütze 6 wiedergegeben. Der Abstand 13 könnte jedoch auch durch eine andere Rückenlehnenlängsstützenkombination beschrieben werden. Der Sitz 1 befindet sich hierbei in einer ersten Position.

Der in der Figur 2 gezeigte Fahrzeugsitz 1 entspricht im Wesentlichen dem Fahrzeugsitz, der in Figur 1 zu sehen ist. Allerdings wurde in der Figur 2 die mindestens eine Rückenlehnenquerstrebe 12 in einem mittleren Bereich nach oben bezüglich der Rückenlehnenhöhenrichtung verschoben, wobei auch eine Verschiebung der mindestens einen Rückenlehnenquerstrebe an einem oder beiden Endbereichen denkbar ist. Wie deutlich zu erkennen ist, hat sich durch diese Verschiebung der Abstand vergrößert. Außerdem wurden die linksseitige 4 und rechtsseitige Rückenlehnenlängsstütze 6 verschwenkt. Bei einer Verschiebung der mindestens einen Rückenlehnenquerstrebe aus der zweiten Position, wie in Figur 2 gezeigt, zurück in die erste Position, wie in Figur 1 gezeigt, würden die Rückenlehnenlängsstützen 4, 6 wieder mit zurückschwenken.

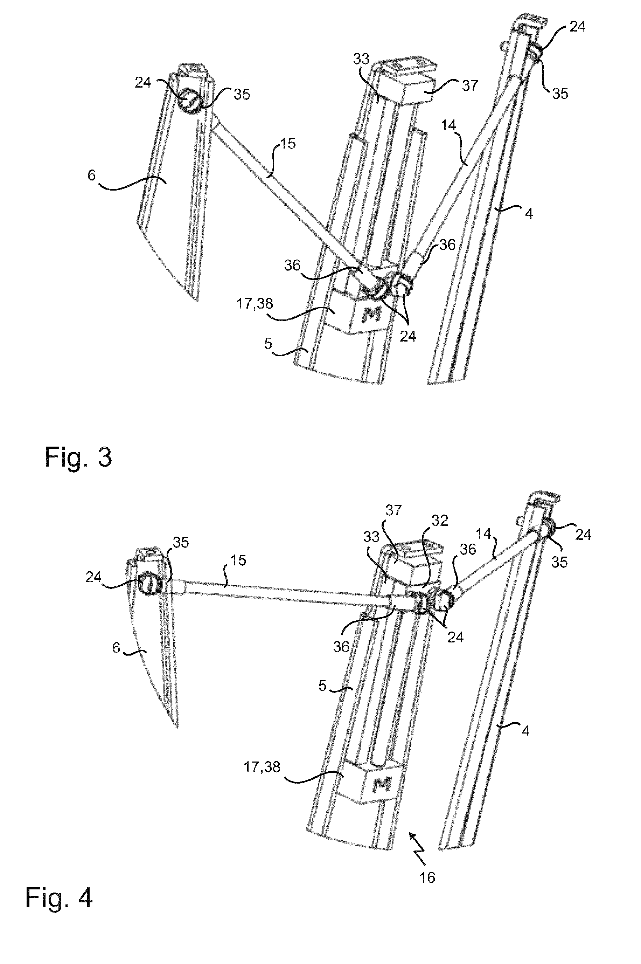

In den Figuren 3 und 4 wird eine schematische Rückansicht der Rückenlehne mit einer Verschiebeeinrichtung 16 gezeigt. In diesem Ausführungsbeispiel sind eine erste 14 und eine zweite Rückenlehnenquerstrebe 15 vorgesehen, die mit ihren zweiten Enden 36 gelenkig über Gelenkverbindungen 24 mit den Rückenlehnenlängsstützen 4, 5, 6 verbunden sind. Hierbei sind die Verbindungen an der linken 4 und der rechten Rückenlehnenlängsstütze 6 ortsfest, die Verbindungen zur mittleren Rückenlehnenlängsstütze 5 sind auf einem bewegten Element 32 befestigt. Das bewegte Element 32 bewegt sich entlang der Rückenlehnenhöhenrichtung und wird in einer Führungsschiene 33 geführt, wodurch eine sichere Führung des bewegten Elements und dadurch der Rückenlehnenquerstreben 14, 15 gewährleistet wird. In diesem Beispiel ist zusätzlich zur Führungsschiene 33 eine Stange 30 vorgesehen, die die Bewegung des bewegten Elements 32 zusätzlich führt. Das bewegte Element 32 umschließt hierbei die Stange 30 in einer Ebene, die im Wesentlichen senkrecht zur Stange 30 ist. Die Bewegung nach oben wird durch ein erstes Begrenzungselement 37 und nach unten durch ein zweites Begrenzungselement 38 begrenzt. Dabei zeigt die Figur 3 die Rückenlehne in einer ersten Position, die Figur 4 die Rückenlehne in einer zweiten Position.

In den Figuren 3 und 4 ist das zweite Begrenzungselement gleichbedeutend mit dem Motor 17, das heißt die Bewegung des bewegten Elements 32 wird nach unten schon durch den Motor 17 begrenzt. Es ist aber auch denkbar, dass der Motor 17 und das zweite Begrenzungselement 38 verschieden sind, also zwei separate Bauteile vorgesehen werden können. Selbstverständlich ist auch denkbar, dass der Motor nicht unten, sondern oben bezüglich der Rückenlehnenhöhenrichtung an der mittleren Rückenlehnenlängsstütze 5 angebracht ist.

Das bewegte Element 32 bewegt sich, wie bereits erwähnt, geführt durch die Führungsschiene 33 nach unten und nach oben bezüglich der Rückenlehnenhöhenrichtung und wird, wie in den Figuren 3 und 4 gezeigt, durch einen Motor, vorzugsweise elektrisch, bewegt. Es ist jedoch auch denkbar, dass das bewegte Element 32 nicht durch einen Motor betrieben wird, sondern auch handbetrieben entlang der Rückenlehnenhöhenrichtung verschoben werden kann.

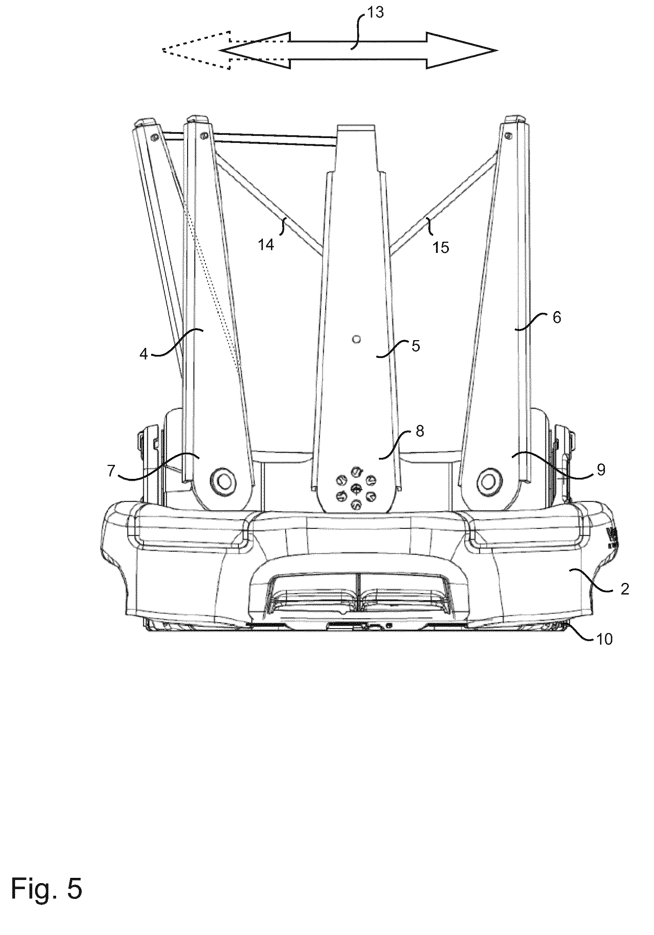

Wie in der Figur 5 deutlich zu erkennen ist, ist es auch denkbar, die Verschiebeeinrichtung 16 so auszugestalten, dass die erste 14 und die zweite Rückenlehnenquerstrebe 15 unabhängig voneinander bewegt werden können. In der Figur 5 ist ein Beispiel hiervon gezeigt. Dabei verbleibt die zweite Rückenlehnenquerstrebe 15 in ihrer ursprünglichen Position, wobei die erste Rückenlehnenquerstrebe ihre Position bzw. Lage verändert. In diesem Fall bewegt sich das zweite Ende 36 der zweiten Rückenlehnenquerstrebe 14 von einer unteren Stellung in eine obere Stellung, wodurch die linke Rückenlehnenquerstrebe 4 von der mittleren Rückenlehne nach außen hin wegbewegt wird. Der Abstand 13 wird also in der Figur 5 nur auf der linken Seite der Rückenlehne verändert. Somit ist es dem Fahrer möglich, die Rückenlehne 3 gemäß seiner körperlichen Gegebenheiten und/oder seinem Komfortverständnis in einer Arbeitsposition in der Breite einzustellen.

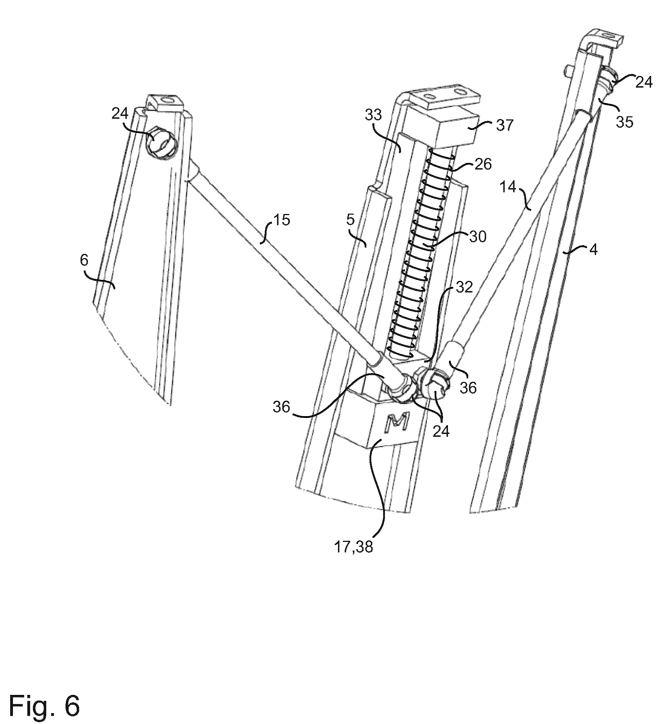

In den Figuren 6 bis 9 werden verschiedene Ausführungsformen bzw. Ausgestaltungen der Verschiebeeinrichtung 16 aufgezeigt. Die Verschiebeeinrichtung 16 mit der ersten 14 und der zweiten Rückenlehnenquerstrebe 15 und dem bewegten Element 32 befindet sich jeweils in einer unteren Stellung. Die Rückenlehnenlängsstützen 4, 5, 6 sind hierbei U-förmig ausgestaltet, so dass durch die Anbringung an der hinteren Seite der Rückenlehnenlängsstützen 4, 5, 6 Aussparungen an den Seiten, an der die Rückenlehnenquerstreben 14, 15 das U-Profil verlassen, derart vorgesehen sein müssen, dass auch eine Bewegung der Rückenlehnenquerstreben 14, 15 nach unten und oben gewährleistet ist. Alternativ können auch kleinere Aussparungen möglich sein, wenn das die Rückenlehnenquerstreben 14, 15 umgebende Material der Rückenlehnenlängsstützen 4, 5, 6 aus einem widerstandsfähigen, aber biegsamen Material besteht.

Figur 6 zeigt die Verschiebeeinrichtung mit einem Federelement 26, die, wie in Figur 6 gezeigt, um die Stange 30 angeordnet ist, wobei auch andere Anordnungen des Federelements 26 denkbar sind. Es ist möglich, dass das Federelement 26 mit dem ersten Begrenzungselement 37 und dem bewegten Element 32 verbunden ist. Das bewegte Element 32 kann auch hier entweder per Motor oder per Hand bewegt werden. Durch das zusätzliche Federelement 26 ist dabei eine bessere Positionierung des bewegten Elements 32 möglich, da aufgrund der Federkraft, die durch das Federelement 26 ausgeübt wird, wird zusammen mit der Reibungskraft, die zwischen der Führungsschiene 33 und dem bewegten Element 32 besteht, eine gute Positionierung des bewegten Elements 32 erreicht werden. Gleichzeitig ist aber weiterhin eine leichte und einfache Bewegung bzw. Verschiebung des bewegten Elements 32 entlang der Rückenlehnenhöhenrichtung möglich.

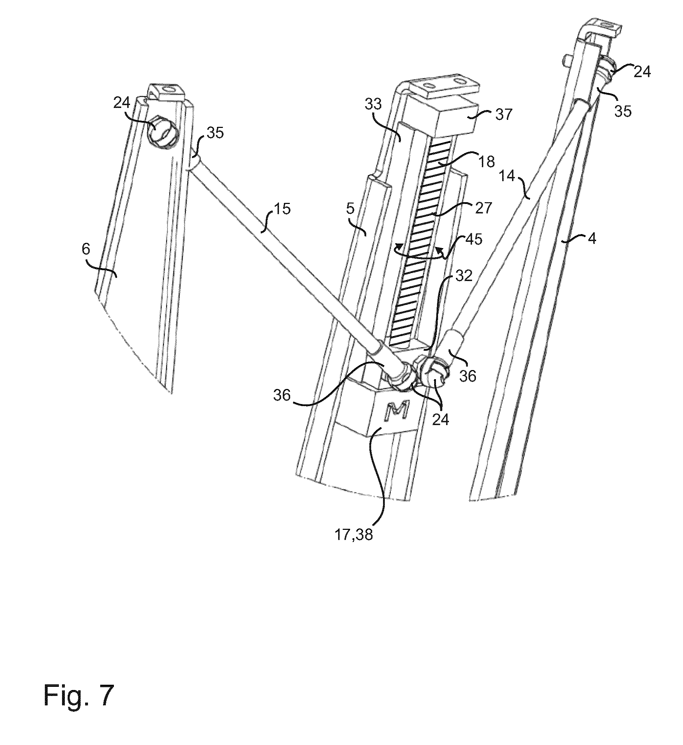

Figur 7 zeigt die Verschiebeeinrichtung 16, wobei die Stange 30 als eine Drehspindel 18 mit einem Gewinde 27 ausgestaltet ist, die sowohl mit dem ersten Begrenzungselement 37 sowie dem Motor 17, sofern vorhanden, drehbar verbunden ist. Das bewegte Element 32 umfasst dabei ein Gewinde, das mit der Drehspindel 18 verbunden ist. Durch den Motor 17 kann also die Drehspindel 18 gedreht werden. Durch die Drehung der Drehspindel wird, abhängig von der Drehrichtung 41 und der Art des Gewindes, das bewegte Element 32 nach unten oder oben bewegt. Ein Mitdrehen des bewegten Elementes 32 wird durch die Führungsschiene 33 verhindert. Wenn keine Drehung der Drehspindel erfolgt, bleibt das bewegte Element 32 in seiner relativen Position zur Drehspindel 18. Eine Bewegung des bewegten Elements 32 ist also nur möglich, wenn die Drehspindel eine Drehung vollzieht. Wenn kein Motor vorgesehen ist, kann die Drehspindel beispielsweise mit einer Kurbel (hier nicht gezeigt), die etwa am ersten Begrenzungselement 37 in axialer Richtung der Drehspindel 18 mit der Drehspindel 18 verbunden ist, ausgestattet sein. Eine Drehung der Drehspindel 18 erfolgt also durch Betätigung der Kurbel.

Es ist auch denkbar, dass anstelle einer Drehspindel 18 mit einem Gewinde 27 eine Kugelumlaufspindel verwendet wird.

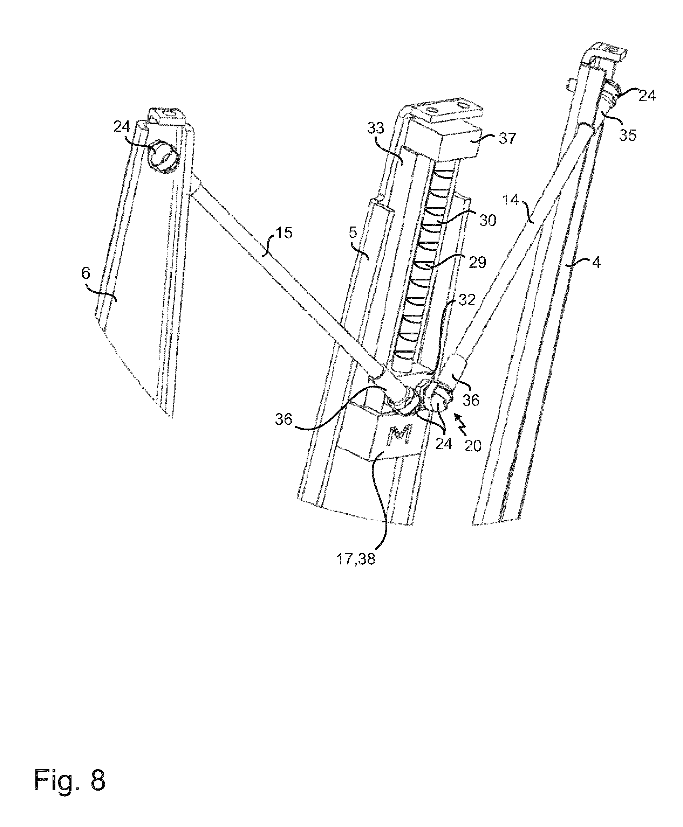

Figur 8 zeigt die Verschiebeeinrichtung 16 mit einer Rastvorrichtung 20, wobei die Stange 30 Rasten 29 aufweist. Die Rasten 29 können beliebig, vorzugsweise in festen Abständen, angeordnet sein. Das bewegte Element 32 umfasst dabei ein Rastmittel (hier nicht gezeigt), die in die Rasten 29 einrasten können und die Verbindung der Rasten 29 mit dem Rastmittel wieder leicht gelöst werden kann.

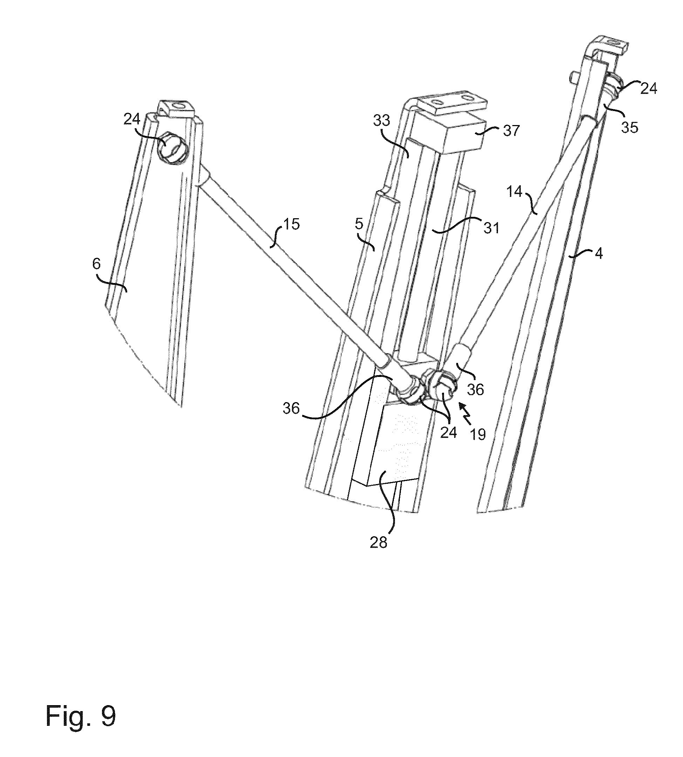

Figur 9 zeigt eine weitere Ausgestaltungsform der Verschiebeeinrichtung 16. Diese umfasst einen pneumatischen Zylinder 19, umfassend einen Arbeitszylinder 28 und einen Kolben 31. Der Kolben 31 ist mit dem ersten Begrenzungselement 37 verbunden, der Arbeitszylinder 28 bewegt sich, geführt durch die Führungsschiene 33, in Rückenlehnenhöhenrichtung. Die erste 14 und die zweite Rückenlehnenquerstrebe 15 sind mit ihren zweiten Enden 35 an dem Arbeitszylinder 28 verbunden. Der pneumatische Zylinder 19 kann hierbei vielfältig ausgestaltet sein, z.B. als ein einfachwirkender oder auch als ein doppeltwirkender Zylinder.

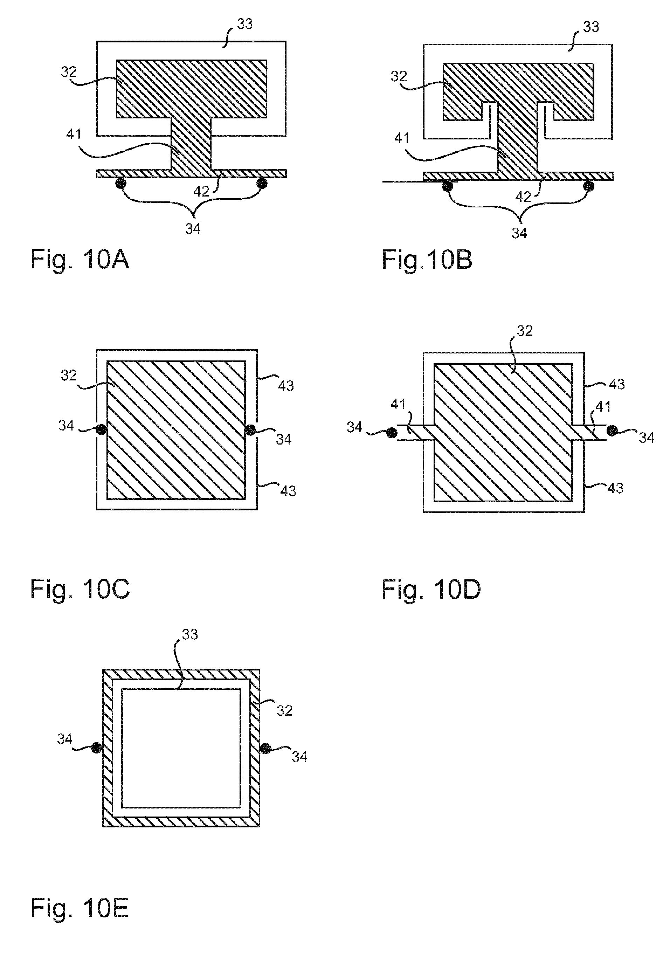

In den Figuren 10A-10E werden eine Reihe verschiedener Ausgestaltungen der Führungsschiene 33 gezeigt. Diese Darstellungen sind natürlich nicht abschließend, da einem Fachmann auch noch weitere, von den gezeigten Ausgestaltungen verschiedene, Möglichkeiten zur Gestaltung der Führungsschienen bekannt sind.

Beispielsweise ist in der Figur 10A oder 10B das bewegte Element 32 größtenteils innerhalb der Führungsschiene 33 angeordnet, wobei aber ein herausstehendes Element 41 sich außerhalb der Führungsschiene 33 befindet und an dem ein Anbringungselement 42 vorgesehen ist, an dem die Rückenlehnenquerstreben 14, 15 mit ihren zweiten Enden 36 in Anbringungspunkten befestigt werden können.

Die Führungsschiene 33 kann auch mehrteilig ausgestaltet sein, wie in den Figuren 10C und 10D zu erkennen ist. Dabei umschließen im Wesentlichen zwei C-förmige Bauteile 43 das bewegte Element. Die C-förmigen Bauteile sind hierbei nicht schlüssig miteinander verbunden, sie sind vielmehr in einem Abstand zueinander angeordnet, so dass ein Schlitz entsteht, wodurch die Rückenlehnenquerstreben 14, 15 mit dem bewegten Element verbunden werden können. Die Anbringung der zweiten Enden 36 der Rückenlehnenquerstreben kann innerhalb der Führungsschiene (Figur 10C) oder außerhalb der Führungsschiene (Figur 10D) sein.

In der Figur 10E ist die Führungsschiene von dem bewegten Element 32 umschlossen.

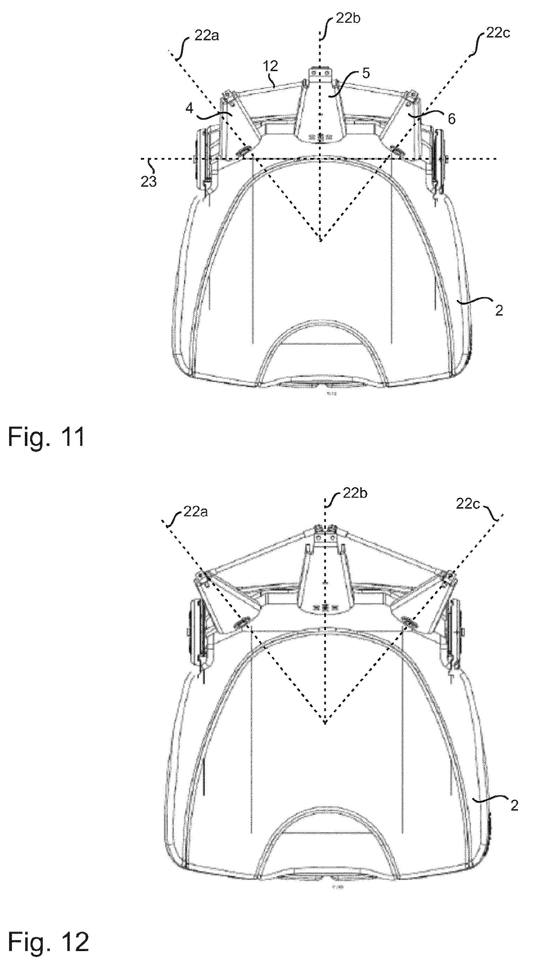

Abschließend ist in den Figuren 11 und 12 eine schematische Draufsicht des Fahrzeugsitzes 1 gezeigt. Dabei sind die Rückenlehnenlängsstützen 4, 5, 6 schwenkbar um ihre jeweilige Schwenkachse 22a, 22b, 22c. Figur 11 zeigt die Rückenlehne in der ersten Position 39, die Figur 12 die Rückenlehne in der zweiten Position 40. Es ist dabei auch möglich, dass die Rückenlehnenlängsstützen 4, 5, 6 jeweils arretiert werden können, so dass keine Verschwenkung um die Drehachse 22a, 22b, 22c mehr möglich ist.

Wie aus einem Vergleich der Figuren 11 und 12 zu erkennen ist, liegen die Schwenkachsen 22a, 22b, 22c zwar in einer gemeinsamen Ebene, sind aber nicht zueinander parallel. Insbesondere ist die mittlere Rückenlehnenlängsstütze 5 in Sitzlängsrichtung weiter hinten als die linksseitige 4 und die rechtsseitige Rückenlehnenlängsstütze 6 angeordnet. Es ist daher notwendig, die gelenkige Verbindung derart auszubilden, dass sie nicht nur um eine Achse parallel zur Schwenkachse bewegt werden können, sondern auch um eine Achse, die in Sitzbreitenrichtung oder in einem Winkel quer zur Sitzbreitenrichtung verläuft. Die zweiten Enden 36 bzw. die gelenkige Verbindung dreht sich in diesem gezeigten Fall also um eine Kombination der parallel zu den Schwenkachsen verlaufende Achse und der in einem Winkel quer zur Sitzbreitenrichtung verlaufenden Achse. Eine solche Bewegung kann beispielsweise durch ein Kugelgelenk oder ein Kreuzgelenk ermöglicht werden.

Durch eine solche Anordnung der Rückenlehnenlängsstützen 4, 5, 6, nämlich dass die mittlere Rückenlehnenlängsstütze 5 in Sitzlängsrichtung weiter hinten also die linksseitige 4 und die rechtsseitige Rückenlehnenlängsstütze 6 angeordnet ist und dass die Schwenkachsen nicht parallel ausgebildet sind, ist eine Anpassung der Rückenlehne 3 bereits in einer unverschwenkten Sitzstellung gegeben, wodurch ein komfortables Sitzen ermöglicht wird.

### Bezugszeichenliste

- 1: Fahrzeugsitz
- 2: Sitzteil
- 3: Rückenlehne
- 4: linksseitige Rückenlehnenlängsstütze
- 5: mittlere Rückenlehnenlängsstütze
- 6: rechtsseitige Rückenlehnenlängsstütze
- 7: unterer Endbereich
- 8: unterer Endbereich
- 9: unterer Endbereich
- 10: Sitzteilrahmen
- 11: oberer Bereich
- 12: Rückenlehnenquerstrebe
- 13: Abstand
- 13a: geänderter Abstand
- 14: erste Rückenlehnenquerstrebe
- 15: zweite Rückenlehnenquerstrebe
- 16: Verschiebeeinrichtung
- 17: Motor
- 18: Drehspindel
- 19: Hubzylinder
- 20: Rastvorrichtung
- 21: oberes Ende
- 22a: Schwenkachse
- 22b: Schwenkachse
- 22c: Schwenkachse
- 23: Schwenkachse der Rückenlehne
- 24: Gelenkverbindung
- 26: Federelement
- 27: Gewinde
- 28: Arbeitszylinder
- 29: Rasten
- 30: Stange
- 31: Kolben
- 32: bewegtes Element
- 33: Führungsschiene
- 34: Anbringungspunkte
- 35: erstes Ende
- 36: zweites Ende
- 37: erstes Begrenzungselement
- 38: zweites Begrenzungselement
- 39: erste Position
- 40: zweite Position
- 41: herausstehendes Element
- 42: Anbringungselement
- 43: C-förmiges Bauteil
- 44: Polsterelement

## Patentansprüche

1. Fahrzeugsitz (1) umfassend ein Sitzteil (2) und eine Rückenlehne (3), wobei die Rückenlehne (3) mindestens eine sich in Rückenlehnenhöhenrichtung erstreckende linksseitige Rückenlehnenlängsstütze (4), mindestens eine sich in Rückenlehnenhöhenrichtung erstreckende mittlere Rückenlehnenlängsstütze (5) und mindestens eine sich in Rückenlehnenhöhenrichtung erstreckende rechtsseitige Rückenlehnenlängsstütze (6) aufweist, wobei die Rückenlehnenlängsstützen (4, 5, 6) jeweils in einem unteren Endbereich (7, 8, 9) mit dem Sitzteil (2) und/oder einem Sitzteilrahmen (10) verbunden sind und mindestens ein Polsterelement (44) aufweisen, wobei die Rückenlehnenlängsstützen (4, 5, 6) in ihren unteren Endbereichen (7, 8, 9) gelenkig mit dem Sitzteil (2) und/oder dem Sitzteilrahmen (10) verbunden sind und mittels mindestens einer in einem oberen Bereich (11) der Rückenlehne (3) angeordneten länglichen Rückenlehnenquerstrebe (12) miteinander verbunden sind, **dadurch gekennzeichnet, dass** durch eine Verschiebung der mindestens einen Rückenlehnenquerstrebe (12) entlang der Rückenlehnenhöhenrichtung in dem oberen Bereich der Rückenlehne ein Abstand (13) zwischen mindestens zwei Rückenlehnenlängsstützen (4, 5, 6) veränderbar ist.

2. Fahrzeugsitz (1) nach Anspruch 1,
**dadurch gekennzeichnet, dass**
die mindestens eine Rückenlehnenquerstrebe (12) mit einem ersten Ende (35) an der linken Rückenlehnenlängsstütze (4) und mit einem zweiten Ende (36) an der rechten Rückenlehnenlängsstütze (6)befestigt ist.

3. Fahrzeugsitz (1) nach Anspruch 1 oder 2,
**dadurch gekennzeichnet, dass**
zwischen der linken (4) und der mittleren Rückenlehnenlängsstütze (5) eine erste Rückenlehnenquerstrebe (14) und zwischen der rechten (6) und der mittleren Rückenlehnenlängsstütze (5) eine zweite Rückenlehnenquerstrebe (15) angeordnet sind und die erste (14) und/oder die zweite Rückenlehnenquerstrebe (15) entlang der Rückenlehnenhöhenrichtung verschiebbar sind.

4. Fahrzeugsitz (1) nach Anspruch 3,
**dadurch gekennzeichnet, dass**
die erste Rückenlehnenquerstrebe (14) mit einem ersten Ende (35) an der linken Rückenlehnenlängsstütze (4) und mit einem zweiten Ende (36) an der mittleren Rückenlehnenlängsstütze (5) befestigt ist und die zweite Rückenlehnenquerstrebe (15) mit einem ersten Ende (35) an der rechten Rückenlehnenlängsstütze (6) und mit einem zweiten Ende (36) an der mittleren Rückenlehnenlängsstütze (5) befestigt ist.

5. Fahrzeugsitz (1) nach einem der vorhergehenden Ansprüche,
**dadurch gekennzeichnet, dass**
die mindestens eine Rückenlehnenquerstrebe (12) gelenkig und/oder verschiebbar an den Rückenlehnenlängsstützen (4, 5, 6) befestigt ist.

6. Fahrzeugsitz (1) nach Anspruch 4,
**dadurch gekennzeichnet, dass**
die zweiten Enden (36) der ersten (14) und der zweiten Rückenlehnenquerstrebe (15) verschiebbar befestigt sind.

7. Fahrzeugsitz (1) nach einem der vorhergehenden Ansprüche,
**dadurch gekennzeichnet, dass**
die Verschiebung der mindestens einen Rückenlehnenquerstrebe (12) mittels mindestens einer Verschiebeeinrichtung (16) und elektrisch und/oder handbetrieben erfolgt.

8. Fahrzeugsitz (1) nach Anspruch 7,
**dadurch gekennzeichnet, dass**
die mindestens eine Verschiebeeinrichtung (16) an der mittleren Rückenlehnenlängsstütze (5) angebracht ist.

9. Fahrzeugsitz (1) nach Anspruch 7 oder 8,
**dadurch gekennzeichnet, dass**
die mindestens eine Verschiebeeinrichtung (16) mindestens einen entlang der Rückenlehnenhöhenrichtung fahrbaren Motor (17), und/oder mindestens eine Drehspindel (18), und/oder mindestens einen pneumatisch betriebenen Hubzylinder (19) und/oder mindestens ein Federelement (26) und/oder mindestens eine Rastvorrichtung (20) umfasst.

10. Fahrzeugsitz (1) nach einem der vorhergehenden Ansprüche,
**dadurch gekennzeichnet, dass**
die mindestens eine Rückenlehnenquerstrebe (12) seitlich, an oberen Enden (21) der Rückenlehnenlängsstützen (4, 5, 6), hinten bezüglich einer Sitzlängsrichtung an den Rückenlehnenlängsstützen (4, 5, 6) und/oder im Inneren der Rückenlehnenlängsstützen (4, 5, 6) angeordnet ist.

11. Fahrzeugsitz (1) nach einem der vorhergehenden Ansprüche,
**dadurch gekennzeichnet, dass**
die mindestens eine Rückenlehnenquerstrebe (12) dauerhaft oder lösbar mit den Rückenlehnenlängsstützen (4, 5, 6) verbunden ist.

12. Fahrzeugsitz (1) nach einem der vorhergehenden Ansprüche,
**dadurch gekennzeichnet, dass**
die mindestens eine Rückenlehnenquerstrebe (12) im oberen Drittel, bevorzugt im oberen Viertel, der Rückenlehne (3) bezüglich der Rückenlehnenhöhenrichtung angeordnet ist.

## Claims

1. Vehicle seat (1) comprising a seat part (2) and a backrest (3), the backrest (3) comprising at least one left-hand backrest longitudinal support (4) extending in the vertical direction of the backrest, at least one middle backrest longitudinal support (5) extending in the vertical direction of the backrest and at least one right-hand backrest longitudinal support (6) extending in the vertical direction of the backrest, the backrest longitudinal supports (4, 5, 6) each being connected to the seat part (2) and/or a seat-part frame (10) in a lower end region (7, 8, 9) and comprising at least one cushion element (44), the backrest longitudinal supports (4, 5, 6) being hingedly connected in their lower end regions (7, 8, 9) to the seat part (2) and/or the seat-part frame (10) and being interconnected by means of at least one elongate backrest cross strut (12) arranged in an upper region (11) of the backrest (3), **characterised in that** it is possible to vary a distance (13) between at least two backrest longitudinal supports (4, 5, 6) by moving the at least one backrest cross strut (12) in the vertical direction of the backrest in the upper region of the backrest.

2. Vehicle seat (1) according to claim 1, **characterised in that** the at least one backrest cross strut (12) is fastened by a first end (35) to the left-hand backrest longitudinal support (4) and by a second end (36) to the right-hand backrest longitudinal support (6).

3. Vehicle seat (1) according to either claim 1 or claim 2, **characterised in that** a first backrest cross strut (14) is arranged between the left-hand (4) and the middle (5) backrest longitudinal support and a second backrest cross strut (15) is arranged between the right-hand (6) and the middle (5) backrest longitudinal support and the first (14) and/or the second (15) backrest cross strut are movable in the vertical direction of the backrest.

4. Vehicle seat (1) according to claim 3, **characterised in that** the first backrest cross strut (14) is fastened by a first end (35) to the left-hand backrest longitudinal support (4) and by a second end (36) to the middle backrest longitudinal support (5) and the second backrest cross strut (15) is fastened by a first end (35) to the right-hand backrest longitudinal support (6) and by a second end (36) to the middle backrest longitudinal support (5).

5. Vehicle seat (1) according to any of the preceding claims, **characterised in that** the at least one backrest cross strut (12) is fastened to the backrest longitudinal supports (4, 5, 6) in a hinged and/or movable manner.

6. Vehicle seat (1) according to claim 4, **characterised in that** the second ends (36) of the first (14) and of the second (15) backrest cross strut are attached in a movable manner.

7. Vehicle seat (1) according to any of the preceding claims, **characterised in that** the at least one backrest cross strut (12) is moved electrically and/or manually by means of at least one movement device (16).

8. Vehicle seat (1) according to claim 7, **characterised in that** the at least one movement device (16) is attached to the middle backrest longitudinal support (5).

9. Vehicle seat (1) according to either claim 7 or claim 8, **characterised in that** the at least one movement device (16) comprises at least one motor (17) which can travel in the vertical direction of the backrest, and/or at least one rotary spindle (18), and/or at least one pneumatically operated lifting cylinder (19) and/or at least one spring element (26) and/or at least one snap-in apparatus (20).

10. Vehicle seat (1) according to any of the preceding claims, **characterised in that** the at least one backrest cross strut (12) is arranged laterally, on upper ends (21) of the backrest longitudinal supports (4, 5, 6), on the rear of the backrest longitudinal supports (4, 5, 6) in relation to a seat longitudinal direction and/or inside the backrest longitudinal supports (4, 5, 6).

11. Vehicle seat (1) according to any of the preceding claims, **characterised in that** the at least one backrest cross strut (12) is permanently or releasably connected to the backrest longitudinal supports (4, 5, 6).

12. Vehicle seat (1) according to any of the preceding claims, **characterised in that** the at least one backrest cross strut (12) is arranged in the upper third, preferably in the upper quarter, of the backrest (3) in relation to the vertical direction of the backrest.

## Revendications

1. Siège de véhicule (1) comprenant une partie d'assise (2) et un dossier (3), le dossier (3) comprenant au moins un appui longitudinal de dossier gauche (4) s'étendant dans le sens de la hauteur du dossier, au moins un appui longitudinal de dossier central (5) s'étendant dans le sens de la hauteur du dossier et au moins un appui longitudinal de dossier droit (6) s'étendant dans le sens de la hauteur du dossier, les appuis longitudinaux de dossier (4, 5, 6) étant reliés chacun, dans une zone d'extrémité inférieur (7, 8, 9), avec la partie d'assise (2) et/ou avec un cadre partielle de siège (10) et comprenant au moins un élément de rembourrage (44), les appuis longitudinaux de dossier (4, 5, 6) étant reliés, au niveau de leurs zones d'extrémité (7, 8, 9), de manière articulée avec la partie d'assise (2) et/ou le cadre partiel de siège (10) et étant reliés entre eux à l'aide d'au moins une traverse de dossier oblongue (12) disposée dans une partie supérieure (11) du dossier (3),
**caractérisé en ce que**
un déplacement de l'au moins une traverse de dossier (12) dans le sens de la hauteur du dossier dans la partie supérieure du dossier permet de faire varier une distance (13) entre au moins deux appuis longitudinaux de dossier (4, 5, 6).

2. Siège de véhicule (1) selon la revendication 1,
**caractérisé en ce que**
l'au moins une traverse de dossier (12) est fixée, avec une première extrémité (35), à l'appui longitudinal de dossier gauche (4) et, avec une deuxième extrémité (36), à l'appui longitudinal de dossier droit (6).

3. Siège de véhicule (1) selon la revendication 1 ou 2,
**caractérisé en ce que**
entre l'appui longitudinal de dossier gauche (4) et l'appui longitudinal de dossier central (5), se trouve une première traverse de dossier (14) et, entre l'appui longitudinal de dossier droit (6) et l'appui longitudinal de dossier central (5), se trouve une deuxième traverse de dossier (15) et la première traverse de dossier (14) et/ou la deuxième traverse de dossier (15) sont mobiles dans le sens de la hauteur du dossier.

4. Siège de véhicule (1) selon la revendication 3,
**caractérisé en ce que**
la première traverse de dossier (14) est fixée, avec une première extrémité (35), à l'appui longitudinal de dossier gauche (4) et, avec une deuxième extrémité (36), à l'appui longitudinal de dossier central (5) et la deuxième traverse de dossier (15) est fixée, avec une première extrémité (35), à l'appui longitudinal de dossier droit (6) et, avec une deuxième extrémité (36), à l'appui longitudinal de dossier central (5).

5. Siège de véhicule (1) selon l'une des revendications précédentes,
**caractérisé en ce que**
l'au moins une traverse de dossier (12) est fixée de manière articulée et/ou mobile aux appuis longitudinaux du dossier (4, 5, 6).

6. Siège de véhicule (1) selon la revendication 4,
**caractérisé en ce que**
les deuxième extrémités (36) de la première traverse de dossier (14) et de la deuxième transverse de dossier (15) sont fixées de manière mobile.

7. Siège de véhicule (1) selon l'une des revendications précédentes,
**caractérisé en ce que**
le déplacement de l'au moins une traverse de dossier (12) a lieu de manière électrique et/ou manuelle au moyen d'au moins un dispositif de déplacement (16).

8. Siège de véhicule (1) selon la revendication 7,
**caractérisé en ce que**
l'au moins un dispositif de déplacement (16) est monté sur l'appui longitudinal de dossier central (5).

9. Siège de véhicule (1) selon la revendication 7 ou 8,
**caractérisé en ce que**
l'au moins un dispositif de déplacement (16) comprend au moins un moteur (17) pouvant être déplacé dans le sens de la hauteur du dossier et/ou au moins une broche rotative (18) et/ou au moins un vérin de levage pneumatique (19) et/ou au moins un élément à ressort (26) et/ou au moins un dispositif d'encliquetage (20).

10. Siège de véhicule (1) selon l'une des revendications précédentes,
**caractérisé en ce que**
l'au moins une traverse de dossier (12) est disposée latéralement, au niveau des extrémités supérieures (21) des appuis longitudinaux du dossier (4, 5, 6), à l'arrière par rapport à une direction longitudinale d'assise, sur les appuis longitudinaux du dossier (4, 5, 6) et/ou à l'intérieur des appuis longitudinaux du dossier (4, 5, 6).

11. Siège de véhicule (1) selon l'une des revendications précédentes,
**caractérisé en ce que**
l'au moins une traverse de dossier (12) est reliée durablement ou de manière amovible avec les appuis longitudinaux du dossier (4, 5, 6).

12. Siège de véhicule (1) selon l'une des revendications précédentes,
**caractérisé en ce que**
l'au moins une traverse de dossier (12) est disposée dans le tiers supérieur, de préférence dans le quart supérieur, du dossier (3) dans le sens de la hauteur du dossier.
